# EUROPEAN PATENT APPLICATION

(11) **EP 3 735 839 A1**
(43) Date of publication of application: **11.11.2020**
(21) Application number: 18898262.3
(22) Date of filing: 14.12.2018
(51) Int. Cl.: A23L 27/00

(54) **INGREDIENT-CONTAINING SEASONING AND METHOD FOR MANUFACTURING SAME**

(30) Priority: 04.01.2018 JP 2018000039
(71) Applicant: Mizkan Holdings Co., Ltd., Handa-shi, Aichi 475-8585 (JP); Mizkan Co., Ltd., Handa-shi, Aichi 475-8585 (JP)
(72) Inventor: OHIKE, Masaki, Handa-shi, Aichi 475-8585 (JP)
(74) Representative: Mewburn Ellis LLP
(86) International application number: PCT/JP2018/046197
(87) International publication number: WO 2019/135340

(57) **Abstract**

To provide an ingredient-containing seasoning having an egg flavor and a creamy texture without a quality deterioration due to emulsification with oil and fat which is peculiar to an emulsified seasoning such as a conventional egg flavor seasoning. The seasoning contains an egg yolk, acetic acid, and an ingredient, has a viscosity of 700 mPa·s or more and 5000 mPa·s at 20°C, has a content ratio of the egg yolk more than 1 mass% and 18 mass% or less, and has an oil/fat content of 10 mass% or less with respect to the entire seasoning.

## Description

### TECHNICAL FIELD

The present disclosure relates to an ingredient-containing seasoning having an egg flavor and having a creamy texture without emulsification, as well as a manufacturing method thereof.

### BACKGROUND ART

Tartar source, which is often used for deep-fried food, has been known as a tasty seasoning because it delivers a good balance of a refreshing flavor of vegetable and vinegar as well as an egg flavor.

However, tartar source contains oil and fat as much as 30 to 60 mass%, and thus it can lead to excessive calorie intake with deep-fried food. Additionally, tartar source requires emulsifiers and other additives as it requires emulsification. Further, since tartar source is an emulsion, it has problems such as quality deterioration due to oil-water separation during storage and cooking, and difficulty in heat sterilization. Also, although the egg flavor goes well with various dishes, tartar source has limited use due to its high viscosity, fattiness, and strong acidity. Thus, the use of tartar source for various dishes has not been widespread (*see* for example, Patent Literature 1).

### CITATION LIST

### Patent Literature

Patent Literature 1: JP 2000-106851A

### SUMMARY

### Technical Problem

As described above, an emulsified seasoning such as the conventional egg flavor seasoning has a problem of flavor deterioration due to oxidative deterioration of the oil and fat contained in the seasoning, and a problem of deterioration such that the emulsified state with the contained oil and fat is separated over time or due to a load such as heating during cooking, as well as a problem of deterioration of an egg flavor and a creamy texture caused by the above problems.

An object of the present disclosure is to provide an ingredient-containing seasoning capable of solving the above conventional problems. That is, the ingredient-containing seasoning has an oil/fat content of 10 mass% or less and has a good egg flavor with a creamy texture (*i.e.,* soft and smooth texture that feels good on the tongue and spreads over the mouth like a cream) together with a refreshing aftertaste. Further, the ingredient-containing seasoning has good entanglement with food materials when topped on the food materials. Here, the oil/fat content is content (mass%) of an oil and fat material (edible oil and fat) with respect to the ingredient-containing seasoning.

### Solution to Problem

The present disclosure relates to the following inventions (1) to (18).
(1) An ingredient-containing seasoning containing an egg yolk, acetic acid, and an ingredient, wherein a viscosity of the seasoning is 700 mPa·s or more and 5000 mPa·s or less at 20°C, a content ratio of the egg yolk contained in the seasoning is more than 1 mass% and 18 mass% or less, and an oil/fat content contained in the entire seasoning is 10 mass% or less.
(2) The seasoning according to (1), wherein the ingredient is one or more selected from the group consisting of onion, carrot, paprika, cucumber, and heated-denatured egg white.
(3) The seasoning according to (1) or (2), wherein the content ratio of the egg yolk is 2 to 18 mass%.
(4) The seasoning according to any one of (1) to (3), containing no oil/fat material.
(5) The seasoning according to any one of (1) to (4), further containing one or more selected from the group consisting of gum, cellulose, and agar.
(6) The seasoning according to any one of (1) to (5), further containing an α-starch.
(7) The seasoning according to (6), wherein the α-starch is fine grains of a pregelatinized processed starch, and wherein a content ratio of the α-starch is 0.01 to 1.8 mass%.
(8) The seasoning according to (6) or (7), wherein a mass ratio of the egg yolk and a pre-swelling α-starch is in a range between 100:1 and 6:1.
(9) A manufacturing method of an ingredient-containing seasoning, the seasoning containing an egg yolk, acetic acid, and an ingredient, having a viscosity of 700 mPa·s or more and 5000 mPa·s or less at 20°C, having a content ratio of the egg yolk of more than 1 mass% and 18 mass% or less, and having an oil/fat content of 10 mass% or less with respect to the entire seasoning, the method including: mixing a liquid containing the egg yolk, the acetic acid, and the ingredient for 10 to 60 minutes at 20 to 40°C; and heating and mixing the liquid for 1 to 10 minutes at 85 to 90°C.
(10) The method according to (9), wherein the seasoning further contains one or more selected from the group consisting of gum, cellulose, and agar.
(11) The seasoning according to (1), wherein the viscosity is 780 mPa·s or more and 4640 mPa·s or less at 20°C.
(12) The seasoning according to (7), wherein the α-starch is fine grains of the pregelatinized processed starch, and wherein the content ratio of the α-starch is 0.1 to 1.66 mass%.
(13) The seasoning accordingto (9), a content ratio of the α-starch is 0.01 to 1.8 mass%, and wherein a mass ratio of the egg yolk and the pre-swelling α-starch is in a range between 100:1 to 6:1.
(14) The seasoning according to (9), wherein the α-starch is fine grains of the pregelatinized processed starch, wherein the content ratio of the α-starch is 0.01 to 1.8 mass%, and wherein a mass ratio of the egg yolk and the pre-swelling α-starch is in a range between 100:1 to 6:1.
(15) A method for enhancing an egg flavor and a creamy texture of an ingredient-containing seasoning, for obtaining a refreshing aftertaste thereof, and for improving entanglement thereof with a food material when topped on the food material, the method including: blending the egg yolk, acetic acid, and an ingredient to obtain the ingredient-containing seasoning having a viscosity of 700 mPa·s or more and 5000 mPa·s or less at 20°C, having a content ratio of an egg yolk of more than 1 mass% and 18 mass% or less, and having an oil/fat content of 10 mass% or less with respect to the entire seasoning.
(16) The method for enhancing an egg flavor and a creamy texture of an ingredient-containing seasoning, for obtaining a refreshing aftertaste thereof, and for improving entanglement thereof with a food material when topped on the food material according to (15), wherein the ingredient-containing seasoning further contains one or more selected from the group consisting of a gum, cellulose, and agar.
(17) The method for enhancing an egg flavor and a creamy texture of an ingredient-containing seasoning, for obtaining a refreshing aftertaste thereof, and for improving entanglement thereof with a food material when topped on the food material according to (16), wherein a content ratio of an α-starch is 0.01 to 1.8 mass%, and wherein a mass ratio of the egg yolk and a pre-swelling α-starch is in a range between 100:1 and 6:1.
(18) The method for enhancing an egg flavor and a creamy texture of an ingredient-containing seasoning, for obtaining a refreshing aftertaste thereof, and for improving entanglement thereof with a food material when topped on the food material according to (16), wherein the α-starch is fine grains of a pregelatinized processed starch, wherein a content ratio of the α-starch is 0.01 to 1.8 mass%, and wherein a mass ratio of the egg yolk and a pre-swelling α-starch is in a range between 100:1 and 6:1.

### Advantageous Effects

With the present disclosure, an ingredient-containing seasoning with a good egg richness and a creamy texture *(i.e.,* soft and smooth texture that is good on the tongue and spreads over the mouth like a cream), as well as a refreshing aftertaste can be achieved. Further, the ingredient-containing seasoning does not cause quality deterioration due to emulsification with the oil and fat which is peculiar to an emulsified seasoning such as the conventional egg flavor seasoning. Additionally, the ingredient-containing seasoning has good entanglement with a food material when topped on the food material. Furthermore, with the method of the present disclosure, a method of manufacturing an ingredient-containing seasoning having an egg flavor and a creamy texture without quality deterioration due to emulsification with the oil and fat which is peculiar to an emulsified seasoning such as the conventional egg flavor seasoning.

The ingredient-containing seasoning of the present disclosure has an oil/fat content of 10 mass% or less and has a lipid content of less than 15 mass%. Accordingly, the ingredient-containing seasoning of the present disclosure does not have a problem of flavor deterioration due to oxidative deterioration of the oil and fat and a problem of deterioration such that the emulsified state with the contained oil and fat is separated into oil (fat) and water over time or due to a load such as heating during cooking. Thus, the seasoning of the present disclosure does not have a problem of deterioration of the egg richness and the creamy texture. Additionally, although the ingredient-containing seasoning of the present disclosure uses ingredients similar to those of tartar source, the seasoning has the oil/fat content of 10 mass% or less and has the lipid content of less than 15 mass%, thereby suppressing excessive calorie intake. Accordingly, the present disclosure provides a technology to manufacture an ingredient-containing seasoning that is healthy and has an egg flavor and a creamy texture with similar ingredients to tartar source.

### DESCRIPTION OF EMBODIMENTS

Hereinafter, the present disclosure will be described in detail. The present disclosure relates to an ingredient-containing seasoning containing an egg yolk, acetic acid, and an ingredient. The seasoning has viscosity of 700 mPa·s or more and 5000 mPa·s or less at 20°C and has an oil/fat content 10 mass% or less with respect to the entire seasoning. In this specification, this ingredient may also be referred to as "the present ingredient-containing seasoning".

As the egg yolk of the present ingredient-containing seasoning, in addition to raw egg yolk, any egg yolk such as salted egg yolk, powdered egg yolk, and sweetened egg yolk, may be used, as long as it has an egg yolk flavor. However, heat-denatured egg yolk is excluded. It should be noted that the origin of the egg yolk is not particularly limited, but chicken eggs are preferably used from the viewpoint of the flavor and availability.

The content ratio of the egg yolk is more than 1 mass% and 18 mass% or less, preferably from 1.5 to 18 mass%, more preferably from 2 to 18 mass%, and particularly preferably from 4 to 18 mass%. If the content ratio of the egg yolk is too small, the seasoning cannot realize a sufficient egg flavor. On the other hand, if the content ratio of the egg yolk is too large, the egg flavor is too strong to enjoy the refreshing flavor.

When the present ingredient-containing seasoning is heated during its manufacturing process, the temperature is preferably set to 90°C or less. If the temperature exceeds 90°C, the egg flavor and the creamy texture are rapidly lost, resulting in that the sufficient effect of the present disclosure cannot be achieved.

As the acetic acid of the present ingredient-containing seasoning, a raw ingredient containing acetic acid such as grain vinegar, fruit vinegar, rice vinegar, *Kasu* vinegar, and brewed vinegar may be used and blended in the seasoning. Here, *Kasu* vinegar is vinegar made from Japanese *sake.* As an amount of the acetic acid that can give an appropriate refreshing taste, the content ratio of acetic acid is preferably selected from 0.4 mass% or more to 1.5% mass% or less, more preferably from 0.4 mass% or more to 1.2 mass% or less, remarkably preferably from 0.4 mass% or more to 1.0 mass% or less. If the content ratio is less than the above ratio, the seasoning cannot realize a sufficient vinegar flavor. On the other hand, if the content ratio is larger than the above ratio, the acid taste is too strong.

The ingredients of the present ingredient-containing seasoning are not particularly limited as long as they can provide a texture without disturbing the egg flavor. For example, heat-denatured (boiled) egg white, heat-denatured egg yolk, heat-denatured whole egg; vegetables such as onion, carrot, paprika, cucumber, cabbage, and bamboo shoot; mushrooms such as *shiitake* mushroom; meats such as beef, pork, chicken and fish; spices such as pepper, sesame and chili; and/or processed food of these can be the ingredients. It should be noted that dried products may be used for the vegetables such as onion, carrot, cabbage, and bamboo shoot. Among the above ingredients, onion, carrot, paprika, cucumber and heat-denatured (boiled) egg white are preferable.

The size of the ingredients is preferably about 1 mm squire to 20 mm squire, and the ingredients are preferably subjected to processing such as cutting, crushing, grinding, slicing, and mincing, depending on the type and characteristics of the ingredients.

The content amount of the ingredients after wetting in the seasoning liquid (*i.e.,* content ratio of ingredients in seasoning liquid) is preferably from 5% or more to 40% or less, more preferably from 7% or more to 35% or less, remarkably preferably from 10% or more to 30% or less, such that the flavor and the texture of the ingredients can be obtained when cooked. If the content amount is less than the above amount, sufficient flavor and texture of the ingredients cannot be achieved. On the other hand, if the content amount is larger than the above amount, the seasoning loses fluidity as a liquid seasoning and disturbs the flavor and texture of dishes.

The present ingredient-containing seasoning contains at least the abovementioned egg yolk, acetic acid, and ingredients and preferably further contains at least one selected from the group consisting of gum, cellulose, and agar. The gum is not particularly limited as long as it is used in foods as a thickening polysaccharide. For example, xanthan gum, gellan gum, tamarind gum, guar gum, locust bean gum, gum arabic, gati gum, karaya gum, or trans gant gum, preferably, xanthan gum, gellan gum, tamarind gum, guar gum, or locust bean gum, more preferably xanthan gum, gellan gum, tamarind gum, or guar gum can be used.

Further, the present ingredient-containing seasoning preferably contains a pregelatinized starch (a-starch). The starch used as the main raw material of the α-starch is not particularly limited. For example, tapioca starch, wheat starch, potato starch, and/or corn starch can be used. As the α-starch, a pregelatinized processed starch is more preferable than a pregelatinized unprocessed starch. Examples of the pregelatinized processed starch include phosphoric acid cross-linked α-starch and hydroxypropylated phosphoric acid cross-linked α-starch. Specifically, for example, tapiocaric acid cross-linked α-starch (fine grains), tapiocaric acid cross-linked α-starch (coarse grains) tapiocaric hydroxypropylated phosphoric acid cross-linked α-starch, and potato phosphoric acid cross-linked α-starch, especially preferably, tapiocaric acid cross-linked α-starch (fine grain) is used as the pregelatinized processed starch.

As the α-starch, especially as the pregelatinized processed starch, fine grains are preferable. However, if the size of the grains is too small, the starch becomes assimilated with the liquid and the seasoning liquid itself would have a high viscosity, resulting in a heavy texture. On the other hand, if the size of the grains is too large, the starch is felt like a sticky solid foreign substance. Thus, it is preferable to adjust the size of the fine grains to a diameter of about 0.5 mm to 4 mm in average. It should be noted that it is preferable to carry out the gelatinization process or the swelling process for obtaining the fine grains of the α-starch in seasoned liquid such as seasoning liquid than in fresh liquid such that the inside of the fine grains is seasoned and the taste of dish becomes more tasty.

The blending ratio (*i.e.,* content ratio) of the α-starch (fine grains), especially the pregelatinized processed starch (fine grains) prior to the swelling process is preferably from 0.01 to 1.8 mass%, more preferably from 0.01 to 1.7 mass%, particularly preferably from 0.1 to 1.7 mass%. If the blending ratio (*i.e.,* content ratio) of the α-starch (fine grains), especially the pregelatinized processed starch (fine grains) prior to the swelling process is too small, the results become insufficient. On the other hand, if the blending ratio is too large, the liquidity of the seasoning becomes significantly impaired.

The α-starch (fine grains), especially the pregelatinized processed starch (fine grains) used for the present ingredient-containing seasoning swells and dissolves in water (cold water) and uniformly gelatinized only by adding cold water without heating. This α-starch (fine grains) smooths the texture of the seasoning, suppresses dripping of the liquid from a food, suppresses immersion in food, and improves seasoning in food *(i.e.,* effect of seasoning surface of food materials). Further, as the α-starch is dispersed in the seasoning liquid together with the ingredients, it improves the dispersibility of the ingredients. As a result, the seasoning can be pour out of the container substantially uniformly while preventing entanglement of the ingredients with each other.

The present ingredient-containing seasoning uses one or more selected from the group consisting of gum, cellulose, and agar. Among these, at least xanthan gum is preferably used from the viewpoint of appropriate viscosity and dispersibility. These materials have a function of adjusting the viscosity of the present ingredient-containing seasoning so as to prevent the ingredients from sticking to each other and/or sticking to the container wall. That is, these materials act as a thickener, a stabilizer, or a dispersant.

It should be noted that the appropriate blending ratio of the one or more selected from the group consisting of gum, cellulose, and agar differs depending on the materials used, and therefore it is difficult to specify uniquely. For example, when xanthan gum is used, the blending ratio is about 0.02 to 2.2 mass%.

At 20°C, the present ingredient-containing seasoning has the lower viscosity limit value of 700 mPa·s or more, preferably 1000 mPa·s or more, and more preferably 1400 mPa·s or more, and has an upper limit value of 5000 mPa·s or less, preferably 4700 mPa·s or less, more preferably 4500 mPa·s or less, most preferably 4400 mPa·s or less. When the viscosity is too low, the seasoning loses the creamy texture. On the other hand, when the viscosity is too high, the seasoning gives a heavy texture. To realize the creamy texture that matches the egg yolk flavor, the viscosity of the seasoning at 20°C must be between 1000 mPa·s or more and 4700 mPa·s or less. The viscosity at 20°C can be measured by a type B viscometer (using No. 3 rotor at 30 rpm).

The oil/fat content of the present ingredient-containing seasoning represents the content amount of the oil and fat materials. The present ingredient-containing seasoning has the oil/fat content of 10 mass% or less, preferably 5 mass% or less. More preferably, the present ingredient-containing seasoning does not use an oil and fat material and has an oil/fat content of less than 1 mass%. A high oil/fat content causes an oil-water separation due to an oxidative deterioration and/or a change in the emulsified state of the oil and fat after storage, or an oil-water separation during cooking, resulting in a loss of a creamy texture and a refreshing aftertaste. Further, if a seasoning with a high oil/fat content is used with an oil-fried food such as a deep-fried food, the food becomes oilier and heavier. As the present ingredient-containing seasoning has an oil/fat content of 10 mass% or less and a lipid content of less than 15 mass%, the present ingredient-containing seasoning does not have a problem of the quality deterioration due to the oil-water separation during the storage and/or cooking. Additionally, the present ingredient-containing seasoning preferably has the lipid content of 15 mass% or less, more preferably 10 mass% or less, further preferably 5 mass% or less, and particularly preferably 3 mass% or less. The lipid content is measured by the chloroform-methanol mixture extraction method (*see* Analysis Manual for Standard Tables of Food Composition in Japan).

The present ingredient-containing seasoning further preferably contains a yeast extract. For the present ingredient-containing seasoning, any yeast extract such as baker's yeast extract, brewer's yeast extract, and torrula yeast extract can be used as long as it can add rich taste. By adding (containing) the yeast extract, it is possible to obtain an enhancing effect of the egg flavor and creaminess while obtaining a substitution effect of suppressing the oil/fat taste and the irritating smell and sour taste of vinegar.

When adding (containing) the yeast extract, the blending ratio (content ratio) of the yeast extract is preferably from 0.1% or more to 10% or less, more preferably from 0.5% or more to 7% or less, remarkably preferably from 1.0% or more to 5% or less. If the blending ratio (content ratio) is lower than the above ratio, it does not sufficiently realize the enhancing effect and the substitution effect. On the other hand, if the blending ratio (content ratio) is higher than the above ratio, a foreign taste of the yeast extract interrupts the egg flavor.

It should be noted that the present ingredient-containing seasoning has a mass ratio of the egg yolk and the pre-swelling α-starch in a range between 1000:1 and 6:1, preferably between 100:1 and 6:1. In the mass ratio of egg yolk and pre-swelling α-starch (fine grains), if the ratio of the egg yolk is too high, the entanglement with the ingredients and the smoothness of the seasoning decrease, thereby the refreshing taste dramatically decreases. On the other hand, if the ratio of the egg yolk is too low, the smoothness and the creamy texture decrease, thereby the richness reduces.

The present ingredient-containing seasoning may further include other additives as long as the effects of the present disclosure are not impaired. Such additives include, for example, *umami*/flavor ingredients, stabilizers, colorants, and calcium salts. To be specific, such additives include, for example, sugars (including high intensity sweeteners), salts, amino acid seasonings, nucleic acid seasonings, organic acid seasonings, flavor raw materials, *umami* seasonings, alcohols, flavors, and spice extracts. The content amounts of these ingredients are not particularly limited and can be appropriately determined according to the applications of the seasoning. Example of the sugars include sugars, maltose, fructose, isomerized sugar, glucose, starch syrup, sugar alcohols such as dextrin, sorbitol, maltitol, and xylitol. These sugars may be used solely or in any combination of two or more at any ratio. Examples of the high intensity sweeteners include aspartame, acesulfame potassium, sucralose, neotame, licorice extract, and stevia and its enzyme-treated product. These high intensity sweeteners may be used solely or in any combination of two or more at any ratio. The salts may be salts themselves or an ingredient containing salts. Examples of the ingredients containing salts are not particularly limited but include soy source and *dashi* stock. Examples of the soy source are not particularly limited but include dark soy source, light soy source, white soy source, *tamari* soy source, and refermented soy sauce. These soy sources may be used solely or in any combination of two or more at any ratio. Examples of the amino acid seasonings include L-glutamate sodium, DL-alanine, glycine, L- or DL-tryptophan, L-phenylalanine, L- or DL-methionine, L-lysine, L-aspartic acid, L-aspartate sodium, and L-arginine. These amino acid seasonings may be used solely or in any combination of two or more at any ratio. Examples of the nucleic acid seasonings include 5'-inosinate disodium, 5'-guanylate disodium, 5'-uridylate disodium, 5'-cytidylate disodium, 5'-ribonucleotide calcium, and 5'-ribonucleotide disodium. These nucleic acid seasonings may be used solely or in any combination of two or more at any ratio. Examples of the organic acid seasonings include calcium citrate, trisodium citrate, potassium gluconate, sodium gluconate, succinic acid, monosodium succinate, disodium succinate, sodium acetate, DL-potassium hydrogen tartrate, L-potassium hydrogen tartrate, DL-sodium tartrate, L-sodium tartrate, potassium lactate, calcium lactate, sodium lactate, monosodium fumarate, and DL-sodium malate. These organic acid seasonings may be used solely or in any combination of two or more at any ratio. Here, it is preferable to use two or more kinds of organic acid seasonings in combination since the *umami* of the combined seasonings can be enhanced synergistically. Examples of the flavor raw materials include, in addition to the yeast extracts, bonito *dashi,* kelp *dashi,* vegetable extracts, bonito extracts, kelp extracts, seafood extracts, meat extracts, and fruit juice. These flavor raw materials may be used solely or in any combination of two or more at any ratio. Examples of the *umami* seasonings include protein hydrolysates. These *umami* seasonings may be used solely or in any combination of two or more at any ratio. Examples of the alcohols include *sake,* synthetic *sake, mirin* (sweet *sake*), *shochu* (distilled sprit), wine, liqueur, and Shaoxing rice wine. These alcohols may be used solely or in any combination of two or more at any ratio. Examples of the flavors include ginger flavors, garlic flavors, mustard flavors, onion flavors, sesame flavors, green onion flavor, allium tuberosum flavors, beefsteak plant flavors, *wasabi* flavors, and lemon flavors. These flavors may be used solely or in any combination of two or more at any ratio. The spice extracts can be any spices such as chili extracts, mustard extracts, ginger extracts, *wasabi* extracts, pepper extracts, garlic extracts, onion extracts, and Japanese pepper extracts. These spice extracts may be used solely or in any combination of two or more at any ratio. Examples of the viscosity modifiers include gum arabic, alginic acid, sodium alginate, carrageenan, karaya gum, agar, locust bean gum, xanthan gum, guar gum, gellan gum, cellulose, tamarind seed gum, tara gum, tragacanth gum, pullulan, pectin, chitin, chitosan, and processed starch. These viscosity modifiers may be used solely or in any combination of two or more at any ratio.

The present ingredient-containing seasoning is configured as described above. Further, this disclosure relates to a manufacturing method of an ingredient-containing seasoning. The ingredient-containing seasoning contains the above-described egg yolk, acetic acid, and ingredients and has a viscosity of 700 mPa·s or more to 5000 mPa·s or less at 20°C. The content ratio of the egg yolk contained in the ingredient-containing seasoning is more than 1 mass% and less than or equal to 18 mass%, and the oil/fat content contained in the entire seasoning is 10 mass% or less. In the method, the seasoning containing the egg yolk, acetic acid, and ingredients is preferably mixed for 10 to 60 minutes at 20 to 40°C and then heated and mixed for 1 to 10 minutes at 85 to 90°C. Hereinafter, this method may also be referred to as "the present method".

The egg yolk, acetic acid, and ingredients according to the present method are identical to those of the present ingredient-containing seasoning described above. Further, the content ratio of the egg yolk, acetic acid, and ingredients is also identical to that of the present ingredient-containing seasoning.

In the present method, the seasoning containing the egg yolk, acetic acid, and the ingredients is mixed for 10 to 60 minutes at 20 to 40°C.

Next, in the present method, the mixed seasoning is heated and mixed for 1 to 10 minutes at 85 to 90°C. This heating and mixing process has an intent of sterilization.

Similar to the present ingredient-containing seasoning, the present method uses a seasoning that contains one or more selected from the group consisting of gum, cellulose, and agar.

Here, the meaning of the "one or more selected from the group consisting of gum, cellulose, and agar" is identical to that of the present ingredient-containing seasoning described above.

This disclosure uses a seasoning that further contains an α-starch. Here, the meaning of the "a-starch" is also identical to that of the present ingredient-containing seasoning described above. Additionally, the meanings of the "one or more selected from the group consisting of gum, cellulose, and agar" and the "pre-swelling α-starch" are also identical to those of the present ingredient-containing seasoning described above.

As similarly described in connection with the above present ingredient-containing seasoning, the present method preferably uses the seasoning that contains a yeast extract. Here, the meaning of the "yeast extract" is identical to that of the present ingredient-containing seasoning described above.

It should be noted that the mass ratio of the egg yolk and the pre-swelling α-starch is also identical to that of the present ingredient-containing seasoning described above.

Hereinafter, this disclosure will be described in detail with reference to embodiments. It should be noted that this disclosure is not limited to the embodiments.

### Measurement of Viscosity

Prior to the measurement, measuring containers were filled with about 150cc of liquid seasonings, which are prepared for the following test examples, and their temperature were adjusted to 20°C. The measuring containers were then set to a type B viscometer (manufactured by TOKI SANGYO CO., LTD.; product name: BMII). The viscosities of the liquid seasonings were then measured using the rotor of the viscometer (No. 3 rotor at 30 rpm) for 20 seconds.

### Test Example 1: Gums, Starches, etc.

The raw materials listed in Table 1 were used in accordance with the compositions of Table 1 to manufacture ingredient-containing seasonings as described below. The viscosities of the manufactured ingredient-containing seasonings were measured by the type B viscometer at 20°C. Additionally, sensory evaluations of the seasonings were performed on the entanglement with the ingredients (foods), appearance smoothness, the egg richness, the creamy texture, and the refreshing texture (Embodiment 1 to Embodiment 5, and Comparative Example 1 to Comparative Example 5). The conditions and the results are shown in Table 1. Here, the manufacturing of the ingredient-containing seasonings, as well as the evaluations of the entanglement with the ingredients (foods), appearance smoothness, the egg richness, the creamy texture, and the refreshing texture were carried out as follows.

### Manufacturing of Ingredient-Containing Seasonings

In the Embodiments 1 to 5, the raw materials listed in Table 1 were uniformly mixed at 20°C for 30 minutes, and then heated and mixed at 85°C for 5 minutes to manufacture the ingredient-containing seasonings. Here, the water amount was determined such that the mass of the entire raw materials becomes 100 mass%. On the other hand, in Comparative Examples 1 and 2, the raw materials listed in Table 1 were heated and mixed at 90°C for 5 minutes to gelatinize the processed starch so as to manufacture the ingredient-containing seasonings. It should be noted that the α-phosphoric acid cross-linked starch (fine grains) used herein had a grain size of 0.5 to 4 mm.

### Evaluation of Entanglement with Materials

A certain amount of the ingredient-containing seasoning was topped on the ingredient (fried shrimp) for each seasoning, and the mountability was visually observed and evaluated according to the following 5 grades. Here, Table 1 shows the average value evaluated by panelists. For the ingredient-containing seasonings, at least 3 points were required. It should be noted that the requirements for other evaluations were the same.
5: Did not drip from ingredient (fried shrimp) and entangled with ingredient excellently
4: Did not drip from ingredient (fried shrimp) and entangled with ingredient well
3: Slightly dripped from ingredient (fried shrimp) but entangled with ingredient
2: Mostly dripped from ingredient (fried shrimp) and hard to be entangled with ingredient
1: Dripped from ingredient (fried shrimp) and hardly entangled with ingredient

### Evaluation of Appearance Smoothness

The seasonings were evaluated for the appearance smoothness by scooping them from the containers with a spoon.
5: Smoothly spread and had glossy appearance
4: Spread and slightly had glossy appearance
3: Spread
2: Not very much spread and slightly sticky or slightly lumped up
1: Not spread and sticky or lumped up

### Evaluation of Egg Richness

The seasonings were evaluated for the egg richness according to the following 5 grades.
5: Felt a strong egg richness
4: Felt a little strong egg richness
3: Slightly felt an egg richness
2: Not felt an egg richness very much
1: Hardly felt an egg richness

### Evaluation of Creamy Texture

The seasonings were evaluated for the creamy texture (*i.e.,* soft and smooth texture that feels good on the tongue and spreads over the mouth like a cream) according to the following 5 grades.
5: Felt a creamy texture excellently
4: Felt a creamy texture
3: Slightly felt a creamy texture
2: No creamy texture
1: Had a bad texture and watery or did not spread in the mouth

### Evaluation of Refreshing Texture

The seasonings were evaluated for the refreshing texture, *i.e.,* refreshing aftertaste, according to the following 5 grades.
5: Felt a good refreshing texture and had a good refreshing aftertaste
4: Felt a refreshing texture and had a little refreshing aftertaste
3: Slightly felt a refreshing texture
2: Hardly felt a refreshing texture and had a little heavy aftertaste
1: No refreshing texture and had a heavy aftertaste

**[TABLE 1]**

| Composition | Embodiment | Embodiment | Embodiment | Embodiment | Embodiment | Comparative Example | Comparative Example |
|---|---|---|---|---|---|---|---|
| (mass%) | 1 | 2 | 3 | 4 | 5 | 1 | 2 |
| Salted egg yolk *10% salt | 11. 1 | 11. 1 | 11.1 | 11.1 | 11.1 | 11.1 | 11.1 |
| parentheses show yolk amounts | (10) | (10) | (10) | (10) | (10) | (10) | (10) |
| Brewed vinegar | 4 | 4 | 4 | 4 | 4 | 4 | 4 |
| Ingredient: dried onion | 5 | 5 | 5 | 5 | 5 | 5 | 5 |
| lower row shows values after swelling in seasoning liquid | Appr. 20 | Appr. 20 | Appr. 20 | Appr. 20 | Appr. 20 | Appr. 20 | Appr. 20 |
| α-phosphoric acid cross-linked starch (fine grains) | - | 0.3 | - | - | - | - | - |
| Phosphate cross-linked starch | - | - | - | - | - | 20 | - |
| Hydroxypropylated starch | - | - | - | - | - | - | 20 |
| Xanthan gum | 0.5 | 0.4 | - | - | - | - | - |
| Tamarind seed gum | - | - | 2 | - | - | - | - |
| Guar gum | - | - | - | 1 | - | - | - |
| Agar | - | - | - | - | 1 | - | - |
| Sugar | 6 | 6 | 6 | 6 | 6 | 6 | 6 |
| Salt | 3 | 3 | 3 | 3 | 3 | 3 | 3 |
| Water | Residues | Residues | Residues | Residues | Residues | Residues | Residues |
| Total amount | 100 | 100 | 100 | 100 | 100 | 100 | 100 |
| | | | | | | | |
| Acetic acid concentration (mass%) | 0.6 | 0.6 | 0.6 | 0.6 | 0.6 | 0.6 | 0. 6 |
| Oil/fat content (mass%) | 0 | 0 | 0 | 0 | 0 | 0 | 0 |
| Lipid content (mass%) | 2.9 | 2.9 | 2.9 | 2.9 | 2.9 | 2.9 | 2. 9 |
| Egg yolk: α-starch | - | 33.3 : 1 | - | - | - | - | - |
| Viscosity (20°C) [mPa•s] | 3680 | 3560 | 4400 | 3260 | 3380 | > 12000 | > 12000 |
| | | | | | | | |

| Sensory evaluation | | | | | | | |
|---|---|---|---|---|---|---|---|
| Entanglement with ingredients | 4.8 | 5.0 | 4.3 | 4.8 | 3.8 | 1.3 | 1.5 |
| Appearance smoothness | 4.5 | 5.0 | 4.8 | 4.3 | 4.5 | 1.3 | 1.5 |
| Egg richness | 4.3 | 4.8 | 4.5 | 4.3 | 4.3 | 3.8 | 3.8 |
| Creamy texture | 4.8 | 4.8 | 4.3 | 4.0 | 4.0 | 1.3 | 1.3 |
| Refreshing texture | 4.0 | 3.8 | 3.8 | 4.0 | 3.5 | 2.3 | 2.5 |

According to the results shown in Table 1, with the processed starch that is not pregelatinized and without α-starch and gums, the seasonings thereof deteriorates the entanglement with the ingredients and/or the appearance smoothness and cannot achieve the creamy texture sufficiently, as shown in the Comparative Examples 1 and 2. On the other hand, with the various gums, the seasonings thereof show advantageous effects on the entanglement with the ingredients, the egg richness, the creamy texture, and the refreshing texture, as shown in the Embodiments 1 to 5. Particularly, the seasoning of the Embodiment 2, which used the gums (Xanthan gum) and the α-starch, showed excellent effects.

### Test Example 2: Approximate Range of Viscosity

Similar to Test Example 1, the raw materials listed in Table 2 were used in accordance with the compositions of Table 2 to manufacture ingredient-containing seasonings. The viscosities of the manufactured ingredient-containing seasonings were measured by the type B viscometer at 20°C. Additionally, sensory evaluations of the seasonings were performed on the entanglement with the ingredients (foods), appearance smoothness, the egg richness, the creamy texture, and the refreshing texture (Embodiment 6 to Embodiment 8, and Comparative Example 3 to Comparative Example 5). The conditions and the results are shown in Table 2.

**[TABLE 2]**

| Composition | Embodiment | Embodiment | Embodiment | Comparative Example | Comparative Example | Comparative Example |
|---|---|---|---|---|---|---|
| (mass%) | 6 | 7 | 8 | 3 | 4 | 5 |
| Salted egg yolk *10% salt | 5.6 | 5.6 | 5.6 | 5.6 | 5.6 | 5.6 |
| parentheses show yolk amounts | (5) | (5) | (5) | (5) | (5) | (5) |
| Brewed vinegar | 4 | 4 | 4 | 4 | 4 | 4 |
| Ingredient: dried onion | 5 | 5 | 5 | 5 | 5 | 5 |
| lower row shows values after swelling in seasoning liquid | Appr. 20 | Appr. 20 | Appr. 20 | Appr. 20 | Appr. 20 | Appr. 20 |
| α-phosphoric acid cross-linked starch (fine grains) | 0.3 | 0.3 | 0.3 | 0.3 | 0.3 | 0.3 |
| Xanthan gum | 0.14 | 0.16 | 0.4 | 0.1 | 0.12 | 1 |
| Sugar | 6 | 6 | 6 | 6 | 6 | 6 |
| Salt | 3 | 3 | 3 | 3 | 3 | 3 |
| Water | Residues | Residues | Residues | Residues | Residues | Residues |
| Total amount | 100 | 100 | 100 | 100 | 100 | 100 |
| | | | | | | |
| Acetic acid concentration (mass%) | 0.6 | 0.6 | 0.6 | 0.6 | 0.6 | 0.6 |
| Oil/fat content (mass%) | 0 | 0 | 0 | 0 | 0 | 0 |
| Lipid content (mass%) | 1.4 | 1.4 | 1.4 | 1.4 | 1.4 | 1.4 |
| Egg yolk: α-starch | 33.3 : 1 | 33.3 : 1 | 33.3 : 1 | 33.3 : 1 | 33.3 : 1 | 33.3 : 1 |
| Viscosity (20°C) [mPa•s] | 780 | 1880 | 2960 | 480 | 600 | 7500 |
| | | | | | | |

| Sensory evaluation | | | | | | |
|---|---|---|---|---|---|---|
| Entanglement with ingredients | 3.0 | 3.5 | 4.8 | 2.5 | 3.0 | 3.5 |
| Appearance smoothness | 3.5 | 3.5 | 4.8 | 2.8 | 2.8 | 2.3 |
| Egg richness | 3.0 | 3.3 | 5.0 | 2.8 | 3.0 | 4.5 |
| Creamy texture | 3.3 | 3.0 | 4.8 | 2.3 | 3.0 | 4.0 |
| Refreshing texture | 4.5 | 4.3 | 4.0 | 4.3 | 4.3 | 2.8 |

According to the results shown in Table 2, when the viscosity at 20°C is less than 700 mPa·s, the seasonings thereof deteriorates the entanglement with the ingredients and the appearance smoothness and cannot achieve the egg richness and the creamy texture sufficiently, as shown in the results of the Comparative Examples 3 and 4. Further, when the viscosity at 20°C is more than 5000 mPa·s, the seasonings thereof deteriorates the entanglement with the ingredients and the appearance smoothness and decrease the refreshing texture, as shown in the results of the Comparative Example 5. On the other hand, when the viscosity at 20°C is 700 mPa·s or more and 5000 mPa·s or less, the entanglement with the ingredients, the appearance smoothness, the egg richness, the creamy texture, and the refreshing texture are all enhanced, as shown in the results of the Embodiments 6 to 8.

### Test Example 3: Approximate Range of Egg Yolk

Similar to Test Example 1, the raw materials listed in Table 3 were used in accordance the compositions of Table 3 to manufacture ingredient-containing seasonings. The viscosities of the manufactured ingredient-containing seasonings were measured by the type B viscometer (at 20°C). Additionally, sensory evaluations of the seasonings were performed on the entanglement with the ingredients (foods), appearance smoothness, the egg richness, the creamy texture, and the refreshing texture (Embodiment 9 to Embodiment 12, and Comparative Example 6 to Comparative Example 7). The conditions and the results are shown in Table 3.

**[TABLE 3]**

| Composition (mass%) | Embodiment 9 | Embodiment 10 | Embodiment 11 | Embodiment 12 | Comparative Example 6 | Comparative Example 7 |
|---|---|---|---|---|---|---|
| Salted egg yolk *10% salt | 2.8 | 4.4 | 11. 1 | 16.7 | 1. 1 | 22.2 |
| parentheses show yolk amounts | (2.5) | (4) | (10) | (15) | (1) | (20) |
| Brewed vinegar | 4 | 4 | 4 | 4 | 4 | 4 |
| Ingredient: dried onion | 5 | 5 | 5 | 5 | 5 | 5 |
| lower row shows values after swelling in seasoning liquid | Appr. 20 | Appr. 20 | Appr. 20 | Appr. 20 | Appr. 20 | Appr. 20 |
| α-phosphoric acid cross-linked starch (fine grains) | 0.3 | 0.3 | 0.3 | 0.3 | 0.3 | 0.3 |
| Xanthan gum | 0.4 | 0.4 | 0.4 | 0.4 | 0.4 | 0.4 |
| Sugar | 6 | 6 | 6 | 6 | 6 | 6 |
| Salt | 3 | 3 | 3 | 3 | 3 | 3 |
| Water | Residues | Residues | Residues | Residues | Residues | Residues |
| Total amount | 100 | 100 | 100 | 100 | 100 | 100 |
| | | | | | | |
| Acetic acid concentration (mass%) | 0.6 | 0.6 | 0.6 | 0.6 | 0.6 | 0.6 |
| Oil/fat content (mass%) | 0 | 0 | 0 | 0 | 0 | 0 |
| Lipid content (mass%) | 0.7 | 1.2 | 2.9 | 4.4 | 0.3 | 5.8 |
| Egg yolk: α-starch | 8.3 : 1 | 13 : 1 | 33.3 : 1 | 50 : 1 | 3:1 | 66.7 : 1 |
| Viscosity (20°C) [mPa•s] | 1540 | 1800 | 3560 | 4640 | 1240 | 6000 |
| | | | | | | |

| Sensory evaluation | | | | | | |
|---|---|---|---|---|---|---|
| Entanglement with ingredients | 4.0 | 4.3 | 5.0 | 4.0 | 3.3 | 3. 3 |
| Appearance smoothness | 4.0 | 4.5 | 5.0 | 3.8 | 2.8 | 3.0 |
| Egg richness | 3.3 | 3.3 | 4.8 | 4.8 | 2.3 | 5.0 |
| Creamy texture | 3.3 | 3.3 | 4.8 | 4.5 | 2.0 | 4.0 |
| Refreshing texture | 4.8 | 4.3 | 3.8 | 3.0 | 4.3 | 2.0 |

According to the results shown in Table 3, when the egg yolk is too small, *i.e.,* when the mass ratio of the egg yolk to the pre-swelling α-starch (fine grains) is too small, the seasonings thereof decreases the egg richness and the creamy texture and reduces the appearance smoothness, as shown in the Comparative Example 6. Further, when the egg yolk is too large, the seasoning thereof loses the refreshing texture and increases the viscosity, thereby the seasoning would easily be denatured disadvantageously, as shown in the Comparative Example 7.

### Test Example 4: Blending Ratio of Pre-swelling α-starch, Ratio of Egg Yolk and Pre-swelling α-starch

Similar to Test Example 1, the raw materials listed in Table 4 (Table 4-1 and Table 4-2; the same shall apply hereinafter) were used in accordance with the compositions of Table 4 to manufacture ingredient-containing seasonings. The viscosities of the manufactured ingredient-containing seasonings were measured by the type B viscometer at 20°C. Additionally, sensory evaluations of the seasonings were performed on the entanglement with the ingredients (foods), appearance smoothness, the richness of the egg, the creamy texture, and the refreshing texture (Embodiment 13 to Embodiment 18, and Comparative Example 8 to Comparative Example 9). The conditions and the results are shown in Table 4.

**[TABLE 4-1]**

| Composition | Embodiment | Embodiment | Embodiment | Embodiment |
|---|---|---|---|---|
| (mass%) | 13 | 14 | 15 | 16 |
| Salted egg yolk *10% salt | 11.1 | 11.1 | 11.1 | 11. 1 |
| parentheses show yolk amounts | (10) | (10) | (10) | (10) |
| Brewed vinegar | 4 | 4 | 4 | 4 |
| Ingredient: dried onion | 5 | 5 | 5 | 5 |
| lower row shows values after swelling in seasoning liquid | Appr. 20 | Appr. 20 | Appr. 20 | Appr. 20 |
| α-phosphoric acid cross-linked starch (fine grains) | 0.01 | 0.1 | 0.3 | 1 |
| Xanthan gum | 0.4 | 0.4 | 0.4 | 0.4 |
| Sugar | 6 | 6 | 6 | 6 |
| Salt | 3 | 3 | 3 | 3 |
| Water | Residues | Residues | Residues | Residues |
| Total amount | 100 | 100 | 100 | 100 |
| | | | | |
| Acetic acid concentration (mass%) | 0.6 | 0.6 | 0.6 | 0.6 |
| Oil/fat content (mass%) | 0 | 0 | 0 | 0 |
| Lipid content (mass%) | 2.9 | 2.9 | 2.9 | 2.9 |
| Egg yolk: α-starch | 1000 : 1 | 100 : 1 | 33.3 : 1 | 10 : 1 |
| Viscosity (20°C) [mPa•s] | 1200 | 1400 | 3560 | 1800 |
| | | | | |

| Sensory evaluation | | | | |
|---|---|---|---|---|
| Entanglement with ingredients | 4.3 | 3. 8 | 5.0 | 4.8 |
| Appearance smoothness | 4.0 | 4.0 | 5.0 | 4.8 |
| Egg richness | 3.3 | 3. 5 | 4.8 | 4.8 |
| Creamy texture | 3.3 | 3.5 | 4.8 | 4.8 |
| Refreshing texture | 3.3 | 3.8 | 3.8 | 3.8 |

**[TABLE 4-2]**

| Composition | Embodiment | Embodiment | Comparative Example | Comparative Example |
|---|---|---|---|---|
| (mass%) | 17 | 18 | 8 | 9 |
| Salted egg yolk *10% salt | 11. 1 | 11.1 | 11.1 | 11.1 |
| parentheses show yolk amounts | (10) | (10) | (10) | (10) |
| Brewed vinegar | 4 | 4 | 4 | 4 |
| Ingredient: dried onion | 5 | 5 | 5 | 5 |
| lower row shows values after swelling in seasoning liquid | Appr.20 | Appr. 20 | Appr. 20 | Appr. 20 |
| α-phosphoric acid cross-linked starch (fine grains) | 1.33 | 1. 66 | 2 | 4 |
| Xanthan gum | 0.4 | 0.4 | 0.4 | 0.4 |
| Sugar | 6 | 6 | 6 | 6 |
| Salt | 3 | 3 | 3 | 3 |
| Water | Residues | Residues | Residues | Residues |
| Total amount | 100 | 100 | 100 | 100 |
| | | | | |
| Acetic acid concentration (mass%) | 0.6 | 0.6 | 0.6 | 0.6 |
| Oil/fat content (mass%) | 0 | 0 | 0 | 0 |
| Lipid content (mass%) | 2.9 | 2.9 | 2.9 | 2.9 |
| Egg yolk: α-starch | 7.5 : 1 | 6 : 1 | 5 : 1 | 2.5 : 1 |
| Viscosity (20°C) [mPa•s] | 2420 | 3060 | 3800 | 4000 |
| | | | | |

| Sensory evaluation | | | | |
|---|---|---|---|---|
| Entanglement with ingredients | 4.8 | 5.0 | 3.8 | 2.0 |
| Appearance smoothness | 4.5 | 4. 5 | 2.8 | 1.3 |
| Egg richness | 4.5 | 4.0 | 4.0 | 3.3 |
| Creamy texture | 4.3 | 4.5 | 3.3 | 2.0 |
| Refreshing texture | 3.5 | 3.8 | 2.8 | 1.5 |

According to the results shown in Tables 4 (Table 4-1 and Table 4-2), when the blending ratio of the pre-swelling α-starch is too large such that the ratio of the egg yolk and the pre-swelling α-starch (fine grains) is less than 6:1, the seasonings thereof disadvantageously decrease the appearance smoothness and/or the refreshing texture, as shown in the Comparative Examples 8 and 9.

### Test Example 5: Ingredients and Oil/Fat

Similar to Test Example 1, the raw materials listed in Table 5 were used in accordance with the compositions of Table 5 to manufacture ingredient-containing seasonings. The viscosities of the manufactured ingredient-containing seasonings were measured by the type B viscometer at 20°C. Additionally, sensory evaluations of the seasonings were performed on the entanglement with the ingredients (foods), appearance smoothness, the richness of the egg, the creamy texture, and the refreshing texture (Embodiment 19 to Embodiment 20, and Comparative Example 10). The conditions and the results are shown in Table 5.

**[TABLE 5]**

| Composition | Embodiment | Comparative Example | Embodiment |
|---|---|---|---|
| (mass%) | 19 | 10 | 20 |
| Salted egg yolk *10% salt | 11.1 | 11.1 | 11.1 |
| parentheses show yolk amounts | (10) | (10) | (10) |
| Brewed vinegar | 4 | 4 | 4 |
| Ingredient: dried onion | 5 | 5 | 3 |
| lower row shows values after swelling in seasoning liquid | Appr. 20 | Appr. 20 | Appr. 12 |
| Ingredient: boiled egg white | - | - | 0.8 |
| Ingredient: red paprika | - | - | 0.8 |
| Ingredient: cucumber | - | - | 0.4 |
| α -phosphoric acid cross-linked starch (fine grains) | - | - | - |
| Xanthan gum | 0.5 | 0.5 | 0.5 |
| Rapeseed oil | 10 | 20 | - |
| Sugar | 6 | 6 | 6 |
| Salt | 3 | 3 | 3 |
| Water | Residues | Residues | Residues |
| Total amount | 100 | 100 | 100 |
| | | | |
| Acetic acid concentration (mass%) | 0.6 | 0.6 | 0.6 |
| Oil/fat content (mass%) | 10 | 20 | 0 |
| Lipid content (mass%) | 12.9 | 22.9 | 2.9 |
| Egg yolk: α-starch | - | - | - |
| Viscosity (20°C) [mPa•s] | 3840 | 4480 | 2820 |
| | | | |

| Sensory evaluation | | | |
|---|---|---|---|
| Entanglement with ingredients | 4.8 | 4.8 | 4. 5 |
| Appearance smoothness | 4.0 | 4.8 | 4.5 |
| Egg richness | 4.8 | 4.5 | 4.0 |
| Creamy texture | 4.0 | 4. 3 | 4.0 |
| Refreshing texture | 3. 3 | 2.5 | 3. 5 |

According to the results shown in Table 5, when the oil/fat content is relatively large, the seasonings thereof deteriorates the refreshing texture. Further, as shown in the Embodiment 20, the seasoning that contains, in addition to dried onion, heat-denatured (boiled) egg white, paprika, and cucumber as the ingredients showed good results in terms of the entanglement with the ingredients, the appearance smoothness, the egg richness, the creamy texture, and the refreshing texture.

### CROSS-REFERENCE TO RELATED APPLICATION

The present application is based on and claims priority to Japanese Patent Application No. 2018-000039, filed on January 4, 2018, the disclosure of which is hereby incorporated by reference in its entirety.

## Claims

1. An ingredient-containing seasoning comprising an egg yolk, acetic acid, and an ingredient, wherein
a viscosity of the seasoning is 700 mPa·s or more and 5000 mPa·s or less at 20°C,
a content ratio of the egg yolk contained in the seasoning is more than 1 mass% and 18 mass% or less, and
an oil/fat content contained in the entire seasoning is 10 mass% or less.

2. The seasoning according to claim 1, wherein the ingredient is one or more selected from the group consisting of onion, carrot, paprika, cucumber, and heated-denatured egg white.

3. The seasoning according to claim 1 or 2, wherein the content ratio of the egg yolk is 2 to 18 mass%.

4. The seasoning according to any one of claims 1 to 3, comprising no oil/fat material.

5. The seasoning according to any one of claims 1 to 4, further comprising one or more selected from the group consisting of gum, cellulose, and agar.

6. The seasoning according to any one of claims 1 to 5, further comprising an α-starch.

7. The seasoning according to claim 6, wherein the α-starch is fine grains of a pregelatinized processed starch, and
wherein a content ratio of the α-starch is 0.01 to 1.8 mass%.

8. The seasoning according to claim 6 or 7, wherein a mass ratio of the egg yolk and a pre-swelling α-starch is in a range between 100:1 and 6:1.

9. A manufacturing method of an ingredient-containing seasoning, the seasoning containing an egg yolk, acetic acid, and an ingredient, having a viscosity of 700 mPa·s or more and 5000 mPa·s or less at 20°C, having a content ratio of the egg yolk of more than 1 mass% and 18 mass% or less, and having an oil/fat content of 10 mass% or less with respect to the entire seasoning, the method comprising:
mixing a liquid containing the egg yolk, the acetic acid, and the ingredient for 10 to 60 minutes at 20 to 40°C; and
heating and mixing the liquid for 1 to 10 minutes at 85 to 90°C.

10. The method according to claim 9, wherein the seasoning further contains one or more selected from the group consisting of gum, cellulose, and agar, and/or contains an α-starch.
